Europäisches Patentamt

European Patent Office

Office européen des brevets

(11) Publication number: **0 149 868**
**B1**

# EUROPEAN PATENT SPECIFICATION

(45) Date of publication of patent specification: **21.09.88**

(21) Application number: **84201905.1**

(22) Date of filing: **18.12.84**

(51) Int. Cl.⁴: **D 06 N 7/04,** D 06 N 3/06,
C 09 G 1/08

(54) A method for manufacturing floor covering material.

(30) Priority: **19.12.83 NL 8304346**

(43) Date of publication of application:
**31.07.85 Bulletin 85/31**

(45) Publication of the grant of the patent:
**21.09.88 Bulletin 88/38**

(84) Designated Contracting States:
**BE DE FR GB LU NL**

(56) References cited:
**DE-C- 955 224**
**GB-A-1 072 043**
**GB-A-1 182 334**

(73) Proprietor: **FORSOM B.V.**
**De Holwert 12**
**NL-7741 KC Coevorden (NL)**

(72) Inventor: **Steege, Willem, Drs.**
**52, Kemphaanstraat**
**NL-1531 VG Wormer (NL)**

(74) Representative: **Mommaerts, Johan Hendrik,**
**Dipl.-Phys.**
**Octrooibureau Lux Willem Witsenplein 4**
**NL-2596 BK Den Haag (NL)**

EP 0 149 868 B1

Courier Press, Leamington Spa, England.

## Description

For many years floor covering materials have been known which mainly consist of an assembly of a plastics layer and a gelated plastisol cover or wear layer.

Although such materials are relatively wear resistant, a draw-back thereof is that the cover layer is sensitive for forces acting thereon in the surface direction, e.g. caused by sliding shoes or the like. It is, as such, possible to make the surface mat, but this does not provide a solution of the problem since sliding traces remain visible. It is not possible to polish such traces away. It is possible indeed to provide an additional thin coating on the surface which is hardened by means of, for instance, heating or UV irradiation or which consists of a hardening two component mixture, but this makes manufacturing more complicated and, therefore, more expensive, and, eventually, such a coating will wear off or become mat which will happen first in the more heavily exposed parts.

The invention provides a method for manufacturing a floor covering material, not having these draw-backs, said method comprising the steps of preparing a plastisol, applying at least one layer of the plastisol onto a substrate or onto an underlying layer on said substrate, and gelating said layer or layers by heating and subsequently cooling for solidifying said gelated layer or layers, and which, for avoiding the objections of the known material, is characterised by finely dividing, in said plastisol, a waxy substance which, at normal temperature, is not or hardly compatible with the plasticizer of the plastisol, said substance having a lower specific mass than said plastisol, and having a melting temperature which is lower than the gelation temperature, this in such a manner that, in the molten condition during gelation, demixing of said substance and migration thereof towards the free surface of said layer occurs, said migration being stopped when said layer is solidified at the end of the gelation step, so that the concentration of said substance in the solidified mass gradually decreases inwardly from said surface, the migration of said substance at normal temperatures being so low that no substantial outward discharge thereof will take place.

Since the waxy substance is not or hardly compatible with the plastisol, demixing will occur after applying the wear layer, and the waxy substance, because of its lower specific mass, will migrate towards the free surface which is impeded by the viscosity of the plastisol, so that a certain concentration gradient towards the free surface develops which remains invariable after the plastisol has set, but a minor part of said substance can emerge outwards thus forming a thin wax layer on the free surface. During use said wax layer will wear off. When the floor covering is being polished, not only the wax layer present thereon will be rubbed out, but also wax will diffuse outwards from the underlying layer, in particular since, during polishing, local heating will occur so that the plastisol becomes softer and its viscosity is lowered.

Since the melting temperature of the waxy substance is lower than the softening temperature of the plastisol, in the liquid condition of the latter a good distribution of the waxy substance can also be obtained, and the latter will remain fluid sufficiently long, also after gelation and setting of the plastisol, for obtaining a desired adjustment of the concentration gradient.

In particular, the waxy substance is a polyethene wax, and furthermore the melting temperature of the wax can be about 120°C, and the softening temperature of the plastisol about 190°C.

In this manner a floor covering material is obtained which comprises a waxy substance which is distributed through the wear layer and has a concentration increasing towards the surface. Because of the presence of a wax deposit in the cover layer, the floor covering can be kept in condition without the need of using polishing agents.

The invention provides, furthermore, a method for replenishing the content of the waxy substance in a floor covering material manufactured by means of the method, which is characterised in that a solution or dispersion of said waxy substance in a suitable volatile carrier is applied on said material, said solution or dispersion being allowed to penetrate into said material.

In particular the waxy substance is dissolved in a solvent which has a softening effect on the gelated plastisol of said material. To that end a solution or dispersion of a polyethene wax in a suitable organic carrier liquid can be used.

The invention will be elucidated below by reference to a drawing, in which a diagrammatic partial section of a floor covering material according to the invention is shown.

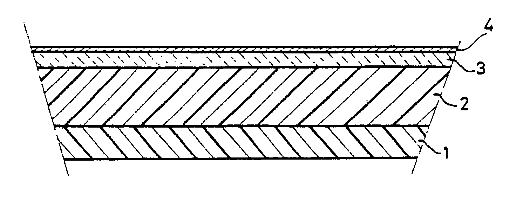

The floor covering material shown in the drawing, which is mainly of the current type, consists of a substrate 1 of current fibrous material conferring the required tensile and bending strength to the floor covering. Thereon a gelated plastisol layer 2 is provided having the required elasticity. As usual this layer can be a coloured or printed uniformly or in a pattern. On the layer 2 a wear layer 3 consisting of a gelated transparent plastisol is provided which produces the required wear resistance of the floor covering.

According to the invention the plastisol of which the layer 3 consists is mixed with a waxy substance, in particular a polyethylene wax, having a melting temperature which is lower than the softening temperature of the plastisol and, at normal temperatures, is not or hardly compatible with said plastisol. Moreover said substance is specifically lighter than the plastisol. In the warm condition a homogeneous suspension of both substances is formed, which is spread in the usual manner as a thin layer on the layer 2.

During gelation of the layer 3 the waxy substance melts, and, because of its incompatibility, a certain demixing will occur. Since the wax is lighter than the plastisol, it will migrate towards the free surface on top of the layer 3 which is, however, counteracted by the viscosity of the plastisol. Thus a certain concentration gradient from the upper to the lower side is produced in the layer 3, and a small quantity of wax will emerge at the free surface, thus forming a very thin wax layer 4.

When in use, by walking on the floor covering, this wax layer 4 is worn off, wax will emerge from the underlying layer 3 because of this concentration gradient, so that the wax layer is replenished. If, by a sliding movement, the wax layer is locally completely removed, wax can be rubbed out from the adjoining layer portions in order to restore the layer again.

Furthermore, it is possible to apply wax as a solution thereof in a suitable, and particularly volatile, solvent on the surface. Thereby particularly local damage can be repaired. Moreover a part of the wax will penetrate with the solvent into the underlying layer 3 and will replenish the wax deposit, and the solvent will evaporate from the layer remaining on the surface. This solvent can, moreover, have a certain softening effect on the gelated plastisol which facilitates the penetration. Such a solution can also be spread over the whole floor covering surface for replenishing the wax layer 4, in particular when the wax concentration in the layer 3 dimishes in the long run, so that such a solution can be used as a polishing agent by means of which the useful life of the floor covering can be substantially extended, and, in particular, its glossy appearance can be maintained. Any waxy substance which can be incorporated into the wear layer in the manner described is suitable for the present method. In particular silicon oils or fats can be used for this purpose.

**Claims**

1. A method for manufacturing a floor covering material comprising the steps of preparing a plastisol, applying at least one layer of the plastisol onto a substrate or onto an underlying layer on said substrate, and gelating said layer or layers by heating and subsequently cooling for solidifying said gelated layer or layers, characterised by finely dividing, in said plastisol, a waxy substance which, at normal temperatures, is not or hardly compatible with the plasticizer of the plastisol, said substance having a lower specific mass than said plastisol, and having a melting temperature which is lower than the gelation temperature, this in such a manner that, in the molten condition during gelation, demixing of said substance and migration thereof towards the free surface of said layer occurs, said migration being stopped when said layer is solidified at the end of the gelation step, so that the concentration of said substance in the solidified mass gradually decreases inwardly from said surface, the migration of said substance at normal temperatures being so low that no substantial outward discharge thereof will take place.

2. The method of Claim 1, characterised in that the waxy substance is a polyethylene wax.

3. The method of Claim 2, characterised in that the melting temperature of the wax is about 120°C, and the softening temperature of the plastisol is about 190°C.

4. A method for replenishing the content of the waxy substance in a floor covering material manufactured by means of the method of any one of Claims 1 to 3, characterised in that a solution or dispersion of said waxy substance in a suitable volatile carrier is applied on said material, said solution or dispersion being allowed to penetrate into said material.

5. The method of Claim 4, characterised in that the waxy substance is dissolved in a solvent which has a softening effect on the gelated plastisol of said material.

6. The method of Claim 4 or 5, characterised in that a solution or dispersion of a polyethylene wax in a suitable organic carrier liquid is used.

**Patentansprüche**

1. Verfahren zur Herstellung eines Bodenbelagsmaterials, umfassend die Schritte der Vorbereitung von Plastisol, Anbringung von wenigstens einer Schicht des Plastisols auf ein Substrat oder auf eine dem besagten Substrat unterlegte Schicht und Gelatinierung besagter Schicht oder Schichten durch Erhitzen und anschließender Abkühlung zwecks Verfestigung besagter gelatinierter Schicht oder Schichten, gekennzeichnet durch feine Abtrennung einer wachsförmigen Substanz in besagtem Plastisol, die, bei normalen Temperaturen, nicht oder nur kaum mit dem Weichmacher besagten Plastisols verträglich ist, wobei besagte Substanz eine geringere spezifische Masse als besagtes Plastisol besitzt und eine Schmelztemperatur hat, die niedriger ist als die Gelatinierungstemperatur, und zwar derart, daß im schmelzflüssigen Zustand während der Gelatinierung eine Entmischung besagter Substanz auftritt und sich eine Wanderung selbiger in Richtung der freien Oberfläche besagter Schicht vollzieht, wobei besagte Wandung aufgehalten wird, sobald besagte Schicht am Ende der Gelatinierungsstufe fest wird, so daß die Konzentration besagter Substantz in der fest gewordenen Masse allmählich abnimmt, und zwar zum Inneren hin von besagter Oberfläche aus gesehen, wobei ferner die Wanderung besagter Substanz bei normalen Temperaturen so gering ist, daß kein wesentlicher, nach außen gerichteter Austritt stattfinden wird.

2. Verfahren nach Anspruch 1, dadurch gekennzeichnet, daß die wachsförmige Substanz ein Polyätylen-Wachs ist.

3. Verfahren nach Anspruch 2, dadurch gekennzeichnet, daß die Schmelztemperatur des Wachses bei etwa 120°C und die Erweichungstemperatur des Plastisols bei etwa 190°C liegt.

4. Verfahren zum Auffüllten des Gehaltes an wachsförmiger Substanz in einem Bodenbelagsmaterial, hergestellt mittels des Verfahrens nach einem der Ansprüche 1 bis 3, dadurch gekennzeichnet, daß eine Lösung oder Dispersion besagter wachsförmiger Substanz in einer geeigneten flüchtigen Trägersubstanz auf besagtes Material aufgetragen wird, so daß besagte Lösung oder Dispersion in besagtes Material eindringen kann.

5. Verfahren nach Anspruch 4, dadurch gekennzeichnet, daß die wachsförmige Substanz in einem Lösungsmittel aufgelöst ist, das eine weichmachende Wirkung auf das gelatinierte Plastisol besagten Materials hat.

6. Verfahren nach Anspruch 4 oder 5, dadurch gekennzeichnet, daß eine Lösung oder Dispersion eines Polyäthylen-Wachses in einer geeigneten organischen Trägerflüssigkeit benutzt wird.

**Revendications**

1. Méthode fabrication d'un matériau de revêtement de sol comprenant les phases de préparation d'un plastisol et constitués par l'application d'au moins une couche de plastisol sur un substrat ou sur une couche intermédiaire de ce substrat et par la gélificiation de la couche avec chauffe et refrodissement subséquent pour solidifier la couche, caractérisée en ce que à des températures normales, une substance cireuse, finement divisée dans ledit plastisol, n'est pas ou peu compatible avec le plastifiant du plastisol, ladite substance ayant une masse spécifique plus faible que le plastisol et une température de fusion inférieure à la température de gélification, on assiste à la ségrégation et à la migration de ladite substance vers la surface à l'air libre de la couche, cette migration étant stoppée lorsque la couche se solidifie à la fin de la phase de gélification si bien que la concentration de la substance dans la masse solidifiée diminue graduellement vers l'intérieur de ladite surface, la migration de cette substance à des températures normales étant si faible qu'aucune décharge substantielle de celle-ci vers l'extérieur ne peut avoir lieu.

2. Méthode selon la revendication 1, caractérisée en ce que la substance cireuse est une cire de polyéthylène.

3. Mèthode selon la revendication 2, caractérisée en ce que la température de fusion de la cire se situe à environ 120 degrés C et la température de déformation du plastisol se situe à environ 190 degrés C.

4. Méthode d'enrichissement de la substance cireuse d'un matériau de revêtement de sol fabriqué suivent une des revendications 1 à 3, caractérisée en ce qu'une solution ou dispersion de ladite substance cireuse dans un véhiculeur volatil adéquat est appliquée sur le dit matériau, cette solution ou dispersion pénétrant dans le matériau.

5. Méthode selon la revendication 4 caractérisée en ce que la substance cireuse est dissoute dans un solvant ayant une action de déformation sur le plastisol gélifié de ce matériau.

6. Méthode selon les revendications 4 ou 5 caractérisée par l'utilisation d'une solution ou dispersion de cire de polyéthylène dans un liquide véhiculeur.organique.